# FASCICULE DE BREVET EUROPEEN

(11) **EP 1 853 805 B1**
(45) Date de publication et mention de la délivrance du brevet: **09.11.2011**
(21) Numéro de dépôt: 06708362.6
(22) Date de dépôt: 17.02.2006
(51) Int. Cl.: F02C 9/26, F02C 7/236, F02C 7/26, F02C 7/22

(54) **ALIMENTATION EN CARBURANT D'UN MOTEUR D'AERONEF**
FLUGZEUGTRIEBWERKTREIBSTOFFVERSORGUNG
AIRCRAFT ENGINE FUEL SUPPLY

(30) Priorité: 17.02.2005 FR 0501640
(43) Date de publication de la demande: 14.11.2007
(73) Titulaire: SNECMA, 75015 Paris (FR)
(72) Inventeur: BROCART, Jean-Marie, F-41330 Champigny en Beauce (FR); DELDALLE, Régis, F-77170 Servon (FR); GALOZIO, Philippe, F-77127 Lieusaint (FR); MARTINI, Michel, F-77630 Arbonne la Forêt (FR); VARIZAT, Alain, F-77590 Bois Le Roi (FR)
(74) Mandataire: Joly, Jean-Jacques
(86) Numéro de dépôt international: PCT/EP2006/060073
(87) Numéro de publication internationale: WO 2006/087377

(56) Documents cités:
- EP-A- 0 377 292
- EP-A- 0 657 651
- FR-A- 2 258 526
- GB-A- 758 679
- US-A- 4 280 323
- US-A1- 2004 117 102
- PATENT ABSTRACTS OF JAPAN vol. 2000, no. 02, 29 février 2000 (2000-02-29) & JP 11 303652 A (NIIGATA ENG CO LTD), 2 novembre 1999 (1999-11-02)

## Description

L'invention concerne un dispositif d'alimentation en carburant d'un moteur d'aéronef, en particulier mais non exclusivement un moteur d'avion à turbine à gaz.

De façon courante, un tel dispositif d'alimentation comporte habituellement une pompe volumétrique à engrenages entraînée par le moteur par l'intermédiaire d'un boîtier d'entraînement d'accessoires couplé à un arbre du moteur. La pompe volumétrique reçoit du carburant venant d'un circuit carburant de l'avion par l'intermédiaire d'une pompe de gavage. Une vanne de dosage à commande électro-hydraulique est montée sur une conduite d'alimentation reliant la sortie de la pompe volumétrique à une chambre de combustion du moteur. Un circuit de retour carburant avec une vanne de dérivation à ouverture variable commandée est branché entre la sortie et l'entrée de la pompe volumétrique. La vanne de dérivation est commandée hydrauliquement pour maintenir la perte de charge à travers la vanne de dosage à une valeur constante ou quasi-constante permettant de délivrer le débit désiré de carburant correspondant à la position de la vanne de dosage. Une vanne de sur-vitesse ou de sur-poussée du moteur peut être montée sur la conduite d'alimentation en série ou en dérivation avec la vanne de dosage pour commander une diminution du débit de carburant en réponse à la détection d'une vitesse ou poussée excessive pouvant traduire une défaillance de la vanne de dosage ou de sa commande. Une vanne de coupure est généralement prévue en série avec les vannes de dosage et de sur-vitesse pour couper le moteur par interruption de l'alimentation en carburant par commande directe à partir du poste de pilotage. On pourra se référer notamment aux documents EP 1 355 054 et US 2004/0117102.

Il a aussi été proposé d'alimenter un moteur à turbine à gaz en carburant au moyen d'une pompe centrifuge qui permet de délivrer du carburant à une pression déterminée en fonction de la vitesse de rotation de la pompe. Le document EP 1 344 917 montre l'utilisation d'une telle pompe centrifuge qui est entraînée par un moteur électrique sous la commande d'un circuit électronique de commande, ce qui permet de régler la vitesse de la pompe, donc la pression du carburant en sortie de celle-ci. Ce même document montre aussi une pompe électrique volumétrique à engrenages qui fonctionne en parallèle avec la pompe centrifuge pour assurer une fonction d'amorçage et délivrer en permanence un débit minimum de carburant, la pompe centrifuge et la pompe volumétrique étant alimentées par une pompe de gavage basse pression.

Le document US 3 946 551 montre un dispositif d'alimentation en carburant avec une pompe à ailettes à commande électrique montée en série avec une pompe centrifuge entraînée par le moteur. La pompe à ailettes à commande électrique a pour fonction de pressuriser le carburant à la valeur nécessaire lors du démarrage du moteur (assistance au démarrage) et d'assurer le dosage du carburant. Un tel montage présente plusieurs inconvénients. La pompe à ailettes à commande électrique fonctionnant en permanence pour assurer le dosage, elle doit présenter une forte cylindrée pour accepter le débit maximum de carburant. Elle doit donc être dimensionnée en conséquence. En outre, avec une pompe de forte cylindrée, la précision du dosage à faible vitesse de rotation est moindre alors qu'une régulation de débit précise est requise aussi en phase de démarrage. Par ailleurs, en cas de panne de la pompe à ailettes, il n'y a plus de dosage de carburant.

Le document "Patent Abstracts of Japan" vol. 200, n° 02, 29 février 2000 (JP 11 303 652) montre un circuit d'alimentation de turbine à gaz en carburant avec deux pompes montées en parallèle, une pompe principale entraînée par la turbine à gaz et une pompe secondaire entraînée par moteur électrique. La pompe secondaire est utilisée pour le démarrage à froid tandis que la pompe principale peut être utilisée en cas de démarrage à chaud. Il n'y a pas d'indication sur la pompe principale et sur une éventuelle commutation de fonctionnement entre les pompes.

Quant au document EP 0 657 651, il montre une association d'une pompe centrifuge et d'une pompe d'assistance au démarrage, cette dernière étant entraînée mécaniquement sur le même arbre que la pompe centrifuge. Une mise hors circuit de la pompe d'assistance oblige à vider celle-ci pour ne pas laisser du carburant stagnant et s'échauffant dans un équipement tournant à haute vitesse. L'entraînement mécanique de la pompe d'assistance et la nécessité de la vider compliquent la réalisation du groupe de pompage.

On connaît par ailleurs du document EP 0 377 292 un dispositif d'alimetation d'une turbine en carburant gazeux avec régulation du débit de gaz par une vanne à ouverture variable commandée qui reçoit le gaz préssurisé sous pression constante.

### Objet et résumé de l'invention

L'invention a pour but de fournir un dispositif d'alimentation en carburant d'un moteur d'aéronef avec une meilleure optimisation en termes de masse et de consommation de puissance en comparaison avec

### l'état de la technique.

Ce but est atteint grâce à un dispositif d'alimentation selon la revendication 1.

L'utilisation d'une pompe centrifuge entraînée par couplage mécanique plutôt que par moteur électrique permet d'utiliser au mieux la puissance mécanique fournie par le moteur en évitant une transformation intermédiaire en énergie électrique, inévitable source de perte de rendement et d'accroissement de masse.

Le groupe de pompage d'assistance permet de suppléer la pompe centrifuge lorsque son entraînement par le moteur est inexistant ou insuffisant pour délivrer la pression de carburant minimale au circuit de régulation de débit de carburant.

Selon un mode de réalisation préféré du dispositif d'alimentation, le groupe de pompage d'assistance comprend une pompe volumétrique et un clapet de surpression ayant une première entrée reliée à la sortie de la pompe volumétrique, une deuxième entrée reliée au circuit carburant de l'aéronef et une sortie reliée à l'entrée de la pompe volumétrique, le clapet de surpression mettant en communication sa première entrée avec sa sortie lorsque la différence de pression entre sa première entrée et sa deuxième entrée excède un seuil prédéterminé.

De préférence alors, l'entrée de la pompe volumétrique est reliée à la sortie haute pression de la pompe centrifuge.

Selon un autre mode de réalisation préféré du dispositif d'alimentation, le groupe de pompage d'assistance comprend une deuxième pompe centrifuge et un circuit de commande électrique pour entraîner la deuxième pompe centrifuge à une vitesse permettant de délivrer ladite pression minimale prédéterminée.

Selon un autre mode de réalisation préféré du dispositif d'alimentation, le groupe de pompage d'assistance comprend une pompe régénérative en lieu et place de la pompe volumétrique du premier mode de réalisation.

Le choix du type de pompe d'assistance sera lié au type d'aéronef. Ainsi, ce dernier mode de réalisation préféré est plus particulièrement destiné aux aéronefs ayant une turbine à gaz située au dessus du réservoir (tels que les hélicoptères, hydravions, etc).

De préférence sont prévus des moyens d'arrêt du groupe de pompage d'assistance lorsque la pression de carburant délivrée au circuit de régulation de débit ou lorsque le régime du moteur dépasse un seuil de pression ou de régime prédéterminé.

Peuvent aussi être prévus des moyens de redémarrage du groupe de pompage d'assistance lorsque la pression de carburant délivrée au circuit de régulation de débit ou le régime du moteur devient inférieure à un seuil de pression ou de régime prédéterminé.

Du fait que le dispositif de régulation de débit de carburant comporte un dispositif de mesure de débit de carburant et une vanne à ouverture variable commandée, ainsi qu'un système de commande relié au dispositif de mesure de débit et à la vanne pour commander celle-ci en fonction d'une valeur de consigne de débit de carburant, la régulation du débit ne nécessite donc pas de circuit de retour carburant avec vanne de dérivation entre la sortie et l'entrée de la pompe principale d'alimentation.

Le dispositif de mesure de débit peut être un débitmètre massique, un débitmètre volumique ou un dispositif hybride qui permet une mesure de débit à partir de la connaissance de la chute de pression et de la section de passage à travers ce dispositif.

L'utilisation d'un débitmètre massique peut permettre une régulation plus précise du débit de carburant en comparaison avec l'utilisation d'un débitmètre volumique. En effet, le besoin du moteur est généralement exprimé en masse de carburant. Si la mesure de débit est volumique, une conversion de masse en volume est nécessaire, mais la précision de la régulation est affectée en raison de l'incertitude sur la masse volumique du carburant, cette masse volumique pouvant varier en fonction des conditions extérieures et du carburant embarqué.

Selon encore une autre particularité du circuit d'alimentation, la vanne est une vanne à commande directe commandée électriquement.

Le système de commande peut comprendre une boucle locale d'asservissement directement reliée au dispositif de mesure de débit et à la vanne. Par boucle locale on entend ici un circuit d'asservissement électronique extérieur au boîtier du module électrique du système de régulation automatique du moteur à pleine autorité ou FADEC ("Full Authority Digital Engine Control").

Avantageusement, le dispositif de régulation du débit de carburant comprend :
- un dispositif de mesure du débit de carburant dans une conduite d'alimentation en carburant,
- une première vanne à ouverture variable commandée montée sur la conduite d'alimentation,
- un système de commande relié au dispositif de mesure de débit et à la première vanne pour commander celle-ci afin de fournir au moteur un débit de carburant désiré,
- une deuxième vanne à ouverture variable commandée montée sur la conduite d'alimentation en série avec la première, et
- des moyens de commande de la deuxième vanne permettant de fournir au moteur un débit de carburant réduit ajustable en réponse à une détection de sur-vitesse ou de sur-poussée du moteur.

La première et la deuxième vannes peuvent être des vannes à commande directe commandées électriquement.

### Brève description des dessins

L'invention sera mieux comprise à la lecture de la description faite ci-après, à titre indicatif mais non limitatif, en référence aux dessins annexés sur lequel :
- la figure 1 illustre un mode de réalisation d'un dispositif d'alimentation en carburant conforme à l'invention ;
- la figure 2 illustre les variations dans le temps de pression délivrées par la pompe centrifuge et un groupe de pompage d'assistance au démarrage du moteur ;
- la figure 3 est un schéma partiel illustrant une variante de réalisation du groupe de pompage d'assistance du dispositif d'alimentation en carburant de la figure 1; et
- les figures 4 et 5 sont des schémas partiels illustrant des variantes de réalisation du circuit de régulation de débit de carburant du dispositif d'alimentation en carburant de la figure 1.

### Description détaillée de modes de réalisation de l'invention

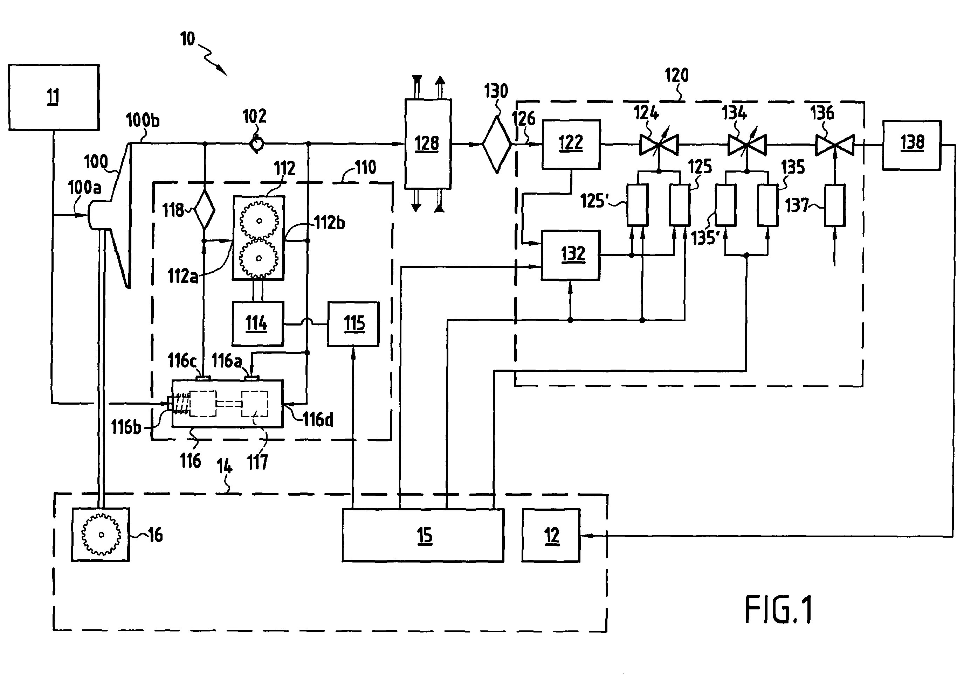

Le circuit 10 d'alimentation en carburant de la figure 1 reçoit du carburant en provenance d'un circuit de carburant 11 d'un avion et délivre un débit de carburant à un système 12 d'injection de carburant d'une chambre de combustion de turbine à gaz d'un moteur 14 équipant l'avion, étant noté que le dispositif d'alimentation décrit peut être utilisé pour des moteurs d'aéronefs autres que des moteurs d'avions à turbine à gaz, par exemple des moteurs d'hélicoptères.

Le circuit 10 comprend une pompe centrifuge 100 constituant la pompe principale du circuit. La pompe 100 a une entrée 100a reliée au circuit de carburant 11 et une sortie haute pression 100b délivrant du carburant à une pression fonction de la vitesse de rotation de la pompe. L'entraînement de la pompe est réalisé par liaison mécanique avec le module 16 d'entraînement d'accessoires du moteur 14 couplé à la turbine de celui-ci.

Un groupe de pompage d'assistance 110 comprend une pompe volumique 112 ayant une entrée 112a reliée à la sortie de la pompe centrifuge 100, un moteur électrique 114 d'entraînement de la pompe 112 commandé par un circuit de commande électrique 115 et un clapet de surpression 116.

La pompe 112 est par exemple une pompe à engrenages. Un filtre 118 peut être monté entre la sortie 100b de la pompe 100 et l'entrée 112a de la pompe 112 pour protéger celle-ci vis-à-vis de particules solides éventuelles véhiculées par le carburant issu du circuit 11. Le fonctionnement de la pompe centrifuge 100 n'est pas affecté par de telles particules.

Le circuit de commande électrique 115 est relié à un système 15 de régulation automatique à pleine autorité du moteur 14, ou FADEC, pour commander le fonctionnement de la pompe 112. Ce circuit de commande 115 pourrait aussi être intégré au système de régulation 15.

Le clapet de surpression 116 a une première entrée 116a reliée à la sortie 112b de la pompe 112, une deuxième entrée 116b reliée au circuit de carburant de l'avion et fournissant une pression de référence au clapet 116, et une sortie 116c reliée à l'entrée 112a de la pompe 112. Le clapet de surpression est réglé pour s'ouvrir et mettre en communication la première entrée 116a avec la sortie 116c lorsque la différence de pression entre les entrées 116a et 116b dépasse un seuil prédéterminé. Pour réaliser le clapet 116, on pourra utiliser un tiroir 117 soumis, d'un côté, à la pression de sortie de la pompe 112, via une prise de pression 116d et, d'un autre côté, à la pression sur la deuxième entrée 116b augmentée d'une force exercée par un ressort.

La sortie 100b de la pompe centrifuge 100 est reliée par un clapet anti-retour 102 à l'entrée d'un circuit 120 de régulation du débit de carburant fourni au système 12 d'injection de carburant, tandis que la sortie 112b de la pompe 112 est reliée à l'entrée du circuit de régulation 120.

Le fonctionnement est le suivant.

Le clapet de surpression 116 est réglé pour s'ouvrir sous une pression correspondant à une pression minimale Pm prédéterminée permettant de couvrir le besoin minimal en carburant du moteur 14 au démarrage.

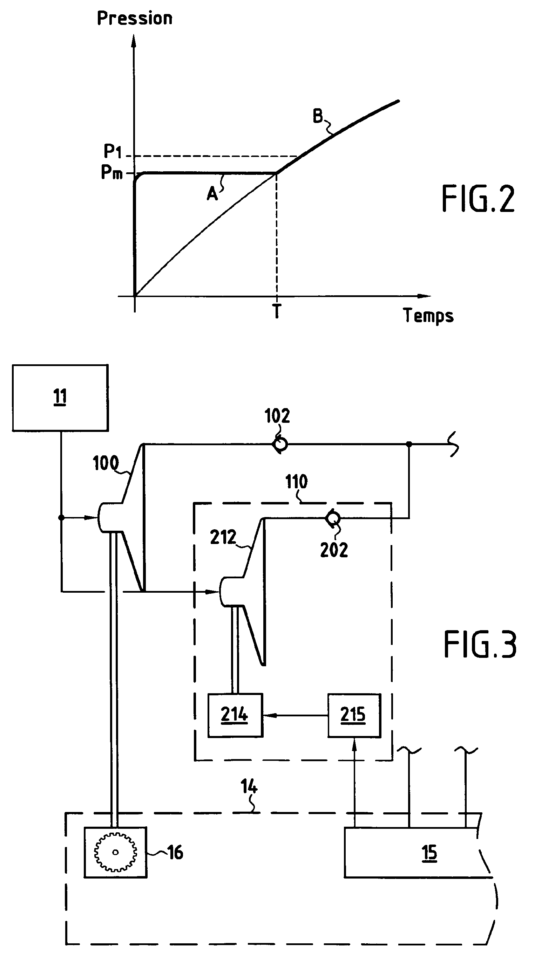

La pompe volumétrique 112 est démarrée et est entraînée à une vitesse permettant de délivrer un débit de carburant excédant le besoin initial du moteur 14 fixé par le système de régulation 120, de sorte que la pression en sortie 112b de la pompe 112 atteint quasi-instantanément la pression minimale Pm (voir courbe A de la figure 2) provoquant l'ouverture du clapet de surpression 116. La pression à la sortie 100b de la pompe centrifuge commence à croître avec le démarrage du moteur 14 (courbe B de la figure 2) mais ne couvre pas initialement le besoin en pression de carburant. La pression à la sortie 112b de la pompe 112 est alors régulée à la valeur de pression Pm, le carburant fourni par la pompe 112 et non débité vers le système d'injection 12 circulant en circuit fermé entre la sortie et l'entrée de la pompe 112 via le clapet 116. Le clapet anti-retour 102 empêche le retour du carburant délivré par la pompe 112 vers la pompe centrifuge 100.

Le groupe de pompage 110 assure donc une fonction d'assistance au démarrage, le clapet 116 permettant de convertir la pompe volumétrique 112 en une pompe délivrant une pression de carburant, de la même façon qu'une pompe centrifuge. Toutefois, contrairement à ce qui peut se passer avec une pompe centrifuge, le fonctionnement de la pompe volumétrique 112 n'est pas affecté par la présence d'air ou de vapeur dans le carburant tiré initialement du circuit 11.

La pression en sortie de la pompe 100 augmente lorsque le régime du moteur croît et lorsque cette pression dépasse la valeur Pm, le clapet anti-retour 102 s'ouvre (point de transition T de la figure 2). La pression fournie au circuit 120 de régulation de débit est alors celle fournie par la pompe centrifuge 100.

Sur la figure 2, les parties en gras des courbes A et B représentent la pression de carburant délivrée au circuit de régulation 120. L'ensemble pompe 100, groupe de pompage 110 et clapet 102 se comporte comme un système de pompage permettant une transition par prépondérance entre les pompes 112 et 100, la pression de carburant fournie au circuit de régulation étant la plus élevée des pressions délivrées en parallèle en sortie des pompes 112 et 100.

Lorsque la pompe 100 a pris le relais de la pompe 112, le fonctionnement de celle-ci peut être arrêté. L'arrêt peut être commandé en réponse au dépassement d'un seuil pression P₁ en sortie de la pompe 100 ou en réponse au dépassement d'un seuil de régime V₁ du moteur 14. Cela peut être commandé par le système de régulation automatique 15 agissant sur le circuit électrique de commande 115 en réponse à des informations fournies par un capteur de pression carburant ou par un capteur de vitesse de turbine du moteur 14. Les seuils P₁ et V₁ peuvent être choisis pour correspondre à une valeur supérieure à Pm.

On notera que le groupe de pompage 110 peut être utilisé non seulement au démarrage mais aussi lors d'autres phases de fonctionnement du moteur au ralenti ou à bas régime dans le cas où la pompe centrifuge 100 devient alors incapable de fournir la pression minimale Pm de carburant. Il suffit alors de relancer le moteur 114 par le circuit de commande 115 si une baisse de pression carburant en deçà d'un seuil de pression P'₁ ou si une diminution du régime du moteur en deçà d'un seuil de régime V'₁ du moteur 14 est détectée, les seuils P'₁ et V'₁ étant choisis inférieurs à P₁ et V₁.

Le groupe de pompage 110 se comporte alors non seulement comme un groupe d'assistance au démarrage mais aussi comme un groupe d'assistance aux bas régimes du moteur pour fournir en toutes circonstances une pression minimale suffisante de carburant.

Dans le mode de réalisation illustré par la figure 1, la pompe 112 est reliée au circuit de carburant 11 à travers la pompe centrifuge qui est « transparente » pour la pompe 112 au démarrage. Ce branchement permet à la pompe 112 de bénéficier de l'augmentation de pression provoquée par la pompe 100 dès qu'elle commence à être entraînée.

Il serait bien entendu possible de relier l'entrée 112a de la pompe 112 au circuit de carburant 11 via un filtre, sans passer à travers la pompe centrifuge 100.

Selon une autre variante de réalisation, la pompe volumétrique 112 peut être remplacée par une pompe régénérative, notamment pour des aéronefs ayant une turbine à gaz située au-dessus du réservoir, tels que les hélicoptères, hydravions, etc....

Dans un autre mode de réalisation illustré par la figure 3, le groupe de pompage d'assistance 110 comprend une pompe centrifuge 212 dont l'entrée est reliée au circuit de carburant 11 et qui est entraînée par un moteur 214 piloté par un circuit électronique de commande 215 relié au système 15 de régulation automatique du moteur 14. Un clapet anti retour 202 est monté en sortie de la pompe 212. La pompe centrifuge 212 est entraînée à une vitesse permettant de délivrer la pression minimale Pm tant que celle-ci ne peut être fournie par la pompe centrifuge 100. Le fonctionnement de la pompe centrifuge 212 peut être interrompu et redémarré selon les besoins de la même manière que celui de la pompe 112 dans le mode de réalisation de la figure 1. Cet autre mode de réalisation se distingue de celui de la figure 1 par une construction simplifiée du groupe de pompage d'assistance 110 mais n'est envisageable que si le circuit de carburant 11 est à même de délivrer un carburant exempt d'air ou de vapeur y compris au démarrage.

Le circuit 120 de régulation du débit de carburant dans la conduite comprend un débitmètre massique 122 et une vanne carburant à commande directe 124 montés sur une conduite 126 reliant la pompe 100 et le groupe de pompage d'assistance 110 au dispositif 12 d'injection de carburant. Le débitmètre 122 est monté de préférence en amont de la vanne 124. Un circuit 128 d'échange thermique entre de l'huile de lubrification d'organes du moteur et le carburant, et un filtre à particules 130 peuvent être insérés sur la conduite 110 en amont du débitmètre 122, de tels circuits d'échange thermique et filtre étant en eux-mêmes bien connus.

La vanne 124 est par exemple une vanne à commande électrique. L'ouverture de la vanne est réglée au moyen d'un actionneur électromécanique 125 tel qu'un vérin ou moteur électrique. L'actionneur 125 reçoit une alimentation électrique à partir d'un circuit électrique du moteur 14, par exemple à partir d'une alimentation intégrée au système 15 de commande automatique du moteur ou d'un bus d'alimentation électrique du moteur 14. A titre de redondance, deux actionneurs semblables 125, 125' fonctionnant en parallèle pourront être prévus.

Une boucle locale d'asservissement 132 alimentée à partir d'un circuit électrique du moteur reçoit un signal fourni par le débitmètre massique 122 représentatif du débit massique réel de carburant dans la conduite 126 et un signal fourni par le système 15 de régulation automatique du moteur et représentatif de la valeur de consigne souhaitée du débit massique de carburant à fournir au moteur 14. L'actionneur 125 est commandé en fonction de l'écart détecté entre les débits massiques réel et de consigne afin de réguler le débit à la valeur de consigne souhaitée.

Bien entendu, la régulation pourra être assurée par un module électronique intégré au système de régulation automatique 15 du moteur 14. L'utilisation d'une boucle locale 132, extérieure au boîtier de ce module électronique, permet toutefois d'éviter la présence de liaison de ce dernier avec le débitmètre 122.

Une vanne 134 de protection de sur-vitesse ou de sur-poussée du moteur 14 est montée sur la conduite 126 en aval de la vanne 124. On pourra avantageusement utiliser une vanne à commande directe avec actionneur électromécanique 135, de façon semblable à la vanne 124 et l'actionneur 125. L'actionneur 135 est commandé à partir du système de commande automatique 15 du moteur 14 par un module distinct de celui dédié à la régulation par la vanne 124, à titre de sécurité. A titre de redondance, deux actionneurs semblables 135, 135' fonctionnant en parallèle peuvent être prévus.

En régime moteur normal, conforme à la consigne, la vanne 134 est en position d'ouverture maximale et la régulation du débit est assurée par la vanne 124.

Le système de régulation automatique 15 reçoit une information représentative du régime du moteur, par exemple une information représentative de la vitesse de rotation de la turbine haute-pression. Lorsqu'un état de sur-vitesse (ou sur-poussée) est détecté, c'est-à-dire une vitesse dépassant la valeur de consigne de vitesse au-delà d'un écart déterminé, et ne peut être corrigé par action sur la vanne 124, la vanne 134 est commandée pour réduire le débit de carburant dans la conduite 126.

Le système de régulation automatique 15 peut être programmé pour amener la vanne 134 dans une position de fermeture partielle prédéterminée de sécurité permettant de fournir un débit de carburant réduit. L'utilisation pour la vanne 134 d'une vanne à commande directe est alors avantageuse en ce qu'elle permet de conserver une pilotabilité du moteur par modification du débit de carburant au moins dans une plage réduite. Cette modification peut être effectuée par le système de régulation automatique 15 en fonction d'un régime de moteur souhaité. Ainsi, suite à une détection de sur-vitesse, la vanne 134 prend le relais de la vanne 124 pour continuer à autoriser une variation de débit au moins dans une certaine plage.

Par rapport aux systèmes de l'état de la technique dans lesquels le fonctionnement de la vanne de sur-vitesse est à deux états : (i) pleine ouverture ou (ii) coupure ou ouverture réduite prédéterminée, la possibilité d'une régulation du débit après détection de sur-vitesse ou de sur-poussée permet de conserver une poussée moteur et d'éviter une situation dans laquelle un débit réduit imposé peut ne pas être acceptable par le moteur dans certaines conditions.

Une vanne de fermeture 136 de type tout ou rien est montée sur la conduite 126, par exemple en aval de la vanne 134. La vanne 136 peut être commandée par un actionneur électromécanique 137. De façon connue, la vanne de fermeture 136 peut être actionnée par commande à partir du système de régulation automatique 15 du moteur ou, prioritairement, à partir du poste de pilotage de l'avion pour couper le moteur 15 par interruption de l'alimentation en carburant.

De façon connue aussi, un débitmètre massique totaliseur 138 peut être monté sur la conduite 126 en aval de la vanne 136 pour fournir une information sur la consommation cumulée du moteur en masse de carburant.

Le besoin d'un moteur en carburant est traduit en masse de carburant. L'utilisation du débitmètre massique 122 permet donc, dans la limite de sa marge d'erreur, une régulation précise de l'alimentation en carburant à partir d'une valeur de consigne de débit massique. Le débitmètre massique peut être du type de ceux décrits dans les documents US 2004/0123674 et US 2004/0129088.

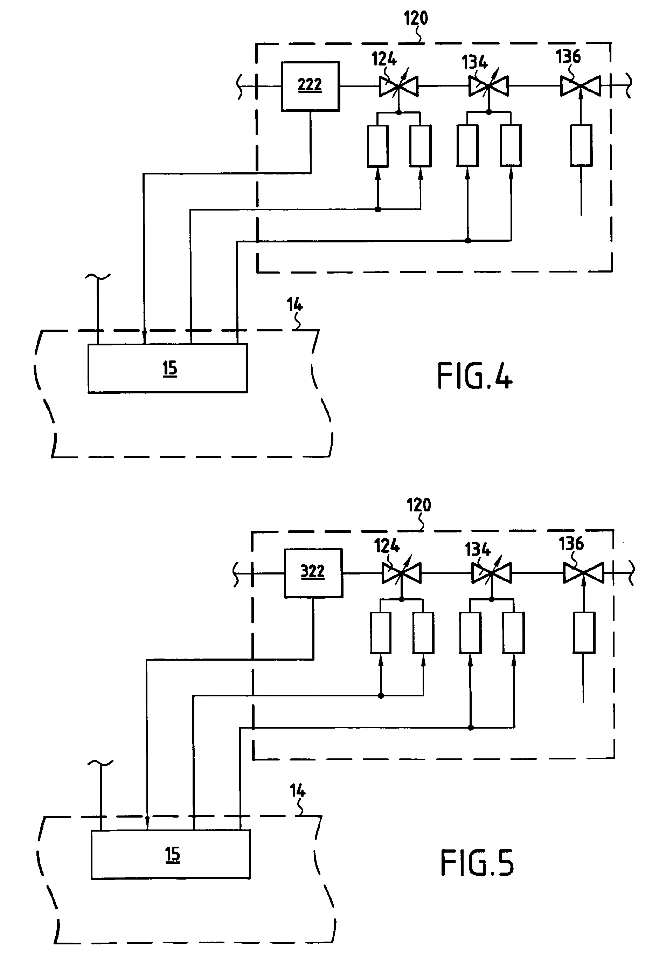

Il est toutefois possible, comme le montre la figure 4, de remplacer le débitmètre massique par un débitmètre volumique 222. L'information de débit volumique réel mesuré par le débitmètre 222 est transmise au système de régulation automatique 15 du moteur 14. Le système 15 est programmé pour traduire le besoin du moteur en débit volumique de consigne à partir d'une valeur de masse volumique estimée du carburant. La vanne 124 à commande directe est alors commandée par le système 15 pour asservir le débit volumique dans la conduite 126 à la valeur de consigne souhaitée.

Selon encore un autre mode de réalisation, comme le montre la figure 5, on peut utiliser un dispositif 322 qui permet une mesure de débit à partir de la connaissance de la chute de pression ΔP à travers le dispositif 322, de la section de passage de carburant à travers le dispositif 322 et de la masse volumique du carburant. Le débit est déterminé par la mesure par un capteur (non représenté) de la position d'une vanne dont la perte de charge est imposée par un ressort.

On notera que le dispositif 322 est connu en soi. On pourra se reporter au document EP 1 344 917. Le dispositif 322 a aussi une construction analogue à celle de vannes de dosage hydrauliques utilisées dans des systèmes connus d'alimentation de moteurs d'avion en carburant, telle que celle du document EP 1 355 054.

Dans la description qui précède, l'utilisation de vannes 124, 134, 136 à commande électrique est envisagée. On pourra en variante utiliser des vannes à commande hydraulique.

## Revendications

1. Dispositif d'alimentation en carburant d'un moteur d'aéronef, comportant un système de pompage comprenant:
- une pompe centrifuge (100) entraînée par couplage mécanique avec le moteur, ayant une entrée basse pression recevant du carburant d'un circuit carburant de l'aéronef et une sortie haute pression; et
- un groupe de pompage d'assistance (110) à commande électrique ayant une entrée reliée au circuit carburant de l'aéronef , pour délivrer sur sa sortie du carburant à une pression minimale prédéterminée,
**caractérisé en ce qu'**il est prévu un circuit (120) de régulation de débit de carburant auquel les sorties de la pompe centrifuge (100) et du groupe de pompage d'assistance (110) sont reliées, le circuit (120) de régulation de débit de carburant comprenant un dispositif (122 ; 222 ; 322) de mesure de débit de carburant, une vanne (124) à ouverture variable commandée et un système de commande relié au dispositif de mesure de débit et à la vanne pour commander celle-ci en fonction d'une valeur de consigne de débit de carburant à fournir au moteur,
et **en ce que** le système de pompage comprend un clapet anti-retour (102) inséré entre la sortie de la pompe centrifuge et la sortie du groupe de pompage d'assistance (110),
le circuit (120) de régulation de débit de carburant étant alimenté en carburant par le système de pompage de telle sorte que la pression du carburant fournie au circuit de régulation est la plus élevée de celles délivrées en parallèle sur leurs sorties respectives par la pompe centrifuge (100) et le groupe de pompage d'assistance (110).

2. Dispositif selon la revendication 1, dans lequel le groupe de pompage d'assistance (110) comprend une pompe volumétrique (112) et un clapet de surpression (116) ayant une première entrée reliée à la sortie de la pompe volumétrique, une deuxième entrée reliée au circuit carburant de l'aéronef et une sortie reliée à l'entrée de la pompe volumétrique, le clapet de surpression mettant en communication sa première entrée avec sa sortie lorsque la différence de pression entre sa première entrée et sa deuxième entrée excède un seuil prédéterminé.

3. Dispositif selon la revendication 2, dans lequel l'entrée de la pompe volumétrique (112) est reliée à la sortie haute pression de la pompe centrifuge (100).

4. Dispositif selon l'une quelconque des revendications 2 et 3, dans lequel la pompe volumétrique est remplacée par une pompe régénérative.

5. Dispositif selon la revendication 1, dans lequel le groupe de pompage d'assistance comprend une deuxième pompe centrifuge (212) et un circuit de commande électrique (214, 215) pour entraîner la deuxième pompe centrifuge à une vitesse permettant de délivrer ladite pression minimale prédéterminée.

6. Dispositif selon l'une quelconque des revendications 1 à 5, **caractérisé en ce qu'**il comporte un circuit (115) de commande d'arrêt du groupe de pompage d'assistance (110) lorsque la pression de carburant délivrée au circuit de régulation de débit ou le régime du moteur dépasse un seuil de pression ou de régime prédéterminé.

7. Dispositif selon l'une quelconque des revendications 1 à 5, comportant un circuit (115) de commande de redémarrage du groupe de pompage d'assistance (110) lorsque la pression de carburant délivrée au circuit de régulation de débit ou le régime du moteur devient inférieur à un seuil de pression ou de régime prédéterminé.

8. Dispositif selon l'une quelconque des revendications 1 à 7, dans lequel le dispositif de mesure de débit est un débitmètre massique (122) et le système de commande pilote la vanne en fonction d'une valeur de consigne de débit massique de carburant.

9. Dispositif selon l'une quelconque des revendications 1 à 8, dans lequel la vanne (124) est une vanne à commande directe commandée électriquement.

10. Dispositif selon l'une quelconque des revendications 1 à 9, dans lequel le système de commande comporte une boucle locale d'asservissement (132) directement reliée au dispositif de mesure de débit (122) et à la vanne (124).

11. Dispositif selon l'une quelconque des revendications 1 à 7, dans lequel le dispositif de mesure de débit est un débitmètre volumique (222).

12. Dispositif selon l'une quelconque des revendications 1 à 7, dans lequel le dispositif de mesure de débit est un dispositif (322) permettant une mesure de débit à partir de la connaissance de la chute de pression et de la section de passage à travers ce dispositif.

13. Dispositif selon l'une quelconque des revendications 1 à 12, dans lequel le circuit de régulation de débit de carburant comprend :
- un dispositif (122 ; 222 ; 322) de mesure du débit de carburant dans une conduite d'alimentation en carburant,
- une première vanne (124) à ouverture variable commandée montée sur la conduite d'alimentation,
- un système de commande relié au dispositif de mesure de débit et à la première vanne pour commander celle-ci afin de fournir au moteur un débit de carburant désiré,
- une deuxième vanne (134) à ouverture variable commandée montée sur la conduite d'alimentation en série avec la première, et
- des moyens de commande de la deuxième vanne permettant de fournir au moteur un débit de carburant réduit ajustable en réponse à une détection de sur-vitesse ou sur-poussée du moteur.

14. Dispositif selon la revendication 13, dans lequel la première et la deuxième vannes (124, 134) sont des vannes à commande directe commandées électriquement.

## Claims

1. A supply device for supplying fuel to an aircraft engine, the device including a pumping system comprising:
· a centrifugal pump (100) driven by mechanical coupling with the engine, having a low pressure inlet receiving fuel from a fuel circuit of the aircraft and a high pressure outlet; and
· an electrically controlled assistance pump unit (110) having an inlet connected to the fuel circuit of the aircraft, to deliver at its outlet, fuel at a predetermined minimum pressure,
· **characterized in that** a fuel flow rate regulation circuit (120) is provided to which the outputs of the centrifugal pump (100) and of the assistance pump unit (110) are connected, the fuel flow rate regulation circuit (120) comprising a fuel flow rate measurement device (122; 222; 322), a controlled variable-restriction valve (124), and a control system connected to the flow rate measurement device and to the valve to control the valve as a function of a setpoint value for the flow rate of fuel to be supplied to the engine;
· and **in that** the pumping system comprises a check valve (102) inserted between the output of the centrifugal pump and the output of the assistance pump unit (110),
· the fuel flow rate regulating circuit (120) being supplied with fuel by the pumping system in such a way that the pressure of the fuel supplied to the regulating circuit is the greater of the pressures delivered in parallel by the centrifugal pump (100) and by the assistance pump unit (110).

2. A device according to claim 1, in which the assistance pump unit (110) comprises a positive-displacement pump (112) and a pressure release valve (116) having a first inlet connected to the outlet of the positive-displacement pump, a second inlet connected to the fuel circuit of the aircraft, and an outlet connected to the inlet of the positive-displacement pump, the pressure release valve putting its first inlet into communication with its outlet when the pressure difference between its first inlet and its second inlet exceeds a predetermined threshold.

3. A device according to claim 2, in which the inlet of the positive-displacement pump (112) is connected to the high pressure outlet of the centrifugal pump (100).

4. A device according to claim 2 or claim 3, in which the positive-displacement pump is replaced by a regenerative pump.

5. A device according to claim 1, in which the assistance pump unit comprises a second centrifugal pump (212) and an electric control circuit (214, 215) for driving the second centrifugal pump at a speed that enables it to deliver said predetermined minimum pressure.

6. A device according to any one of claims 1 to 5, **characterized in that** it comprises a control circuit (115) for stopping the assistance pump unit (110) when the pressure of fuel delivered to the flow rate regulation circuit or the speed of the engine exceeds a predetermined pressure or speed threshold.

7. A device according to any one of claims 1 to 5, including a circuit (115) for controlling restarting of the assistance pump unit (110) when the pressure of the fuel delivered to the flow rate regulator circuit or the speed of the engine becomes less than a predetermined pressure or speed.

8. A device according to any one of claims 1 to 7, in which the flow rate measurement device is a mass flow meter (122) and the control system controls the valve as a function of a setpoint value for fuel mass flow rate.

9. A device according to any one of claims 1 to 8, in which the valve (124) is a directly-controlled valve that is electrically controlled.

10. A device according to any one of claims 1 to 9, in which the control system includes a local servo-control loop (132) connected directly to the flow rate measurement device (122) and to the valve (124).

11. A device according to any one of claims 1 to 7, in which the flow rate measurement device is a volumetric flow meter (222).

12. A device according to any one of claims 1 to 7, in which the flow rate measurement device is a device (322) enabling flow rate to be measured on the basis of knowledge of the pressure drop and the flow section through the device.

13. A device according to any one of claims 1 to 12, in which the fuel flow rate regulation circuit comprises:
· a device (122; 222; 322) for measuring fuel flow rate in a fuel supply pipe;
· a first controlled variable-restriction valve (124) mounted in the supply pipe;
· a control system connected to the flow rate measurement device and to the first valve to control the latter to supply the engine with fuel at a desired flow rate;
· a second controlled variable-restriction valve (134) mounted in the supply pipe in series with the first valve; and
· control means for the second valve enabling the engine to be supplied with fuel at an ajustable, reduced flow rate, in response to detecting over-speed or over-thrust of the engine.

14. A device according to claim 13, in which the first and second valves (124, 134) are directly-controlled valves that are controlled electrically.

## Patentansprüche

1. Vorrichtung zur Treibstoffversorgung eines Flugzeugtriebwerks, umfassend ein Pumpsystem mit:
- einer Kreiselpumpe (100), die durch mechanische Kopplung mit dem Triebwerk angetrieben wird, einen Niederdruckeinlaß, der Treibstoff von einem Treibstoffkreis des Flugzeugs aufnimmt, sowie einen Hochdruckauslaß, aufweist, und
- einem Hilfspumpaggregat (110) mit elektrischer Steuerung, das einen mit dem Treibstoffkreis des Flugzeugs verbundenen Einlaß aufweist, um an seinem Auslaß Treibstoff mit einem vorbestimmten Mindestdruck zu liefern,
**dadurch gekennzeichnet, daß** ein Kreis (120) zur Regulierung des Treibstoffdurchsatzes vorgesehen ist, mit dem die Auslässe der Kreiselpumpe (100) und des Hilfspumpaggregats (110) verbunden sind, wobei der Kreis (120) zur Regulierung des Treibstoffdurchsatzes eine Vorrichtung (122; 222; 322) zur Messung des Treibstoffdurchsatzes, ein gesteuertes Ventil (124) mit variabler Öffnung sowie ein Steuerungssystem umfaßt, das mit der Durchsatzmeßvorrichtung und mit dem Ventil verbunden ist, um dieses in Abhängigkeit eines Sollwerts der an das Triebwerk zu liefernden Treibstoffmenge zu steuern, und
daß das Pumpsystem ein Rückschlagventil (102) umfaßt, das zwischen dem Auslaß der Kreiselpumpe und dem Auslaß des Hilfspumpaggregats (110) eingefügt ist,
wobei der Kreis (120) zur Regulierung des Treibstoffdurchsatzes durch das Pumpsystem derart mit Treibstoff beaufschlagt wird, daß der dem Regulierungskreis bereitgestellte Druck des Treibstoffs der höchste derjenigen ist, die parallel an ihren jeweiligen Auslässen durch die Kreiselpumpe (100) und das Hilfspumpaggregat (110) bereitgestellt werden.

2. Vorrichtung nach Anspruch 1, wobei das Hilfspumpaggregat (110) eine Verdrängerpumpe (112) und ein Überdruckventil (116) umfaßt, das einen ersten Einlaß, der mit dem Auslaß der Verdrängerpumpe verbunden ist, einen zweiten Einlaß, der mit dem Treibstoffkreis des Flugzeugs verbunden ist, und einen Auslaß, der mit dem Einlaß der Verdrängerpumpe verbunden ist, aufweist, wobei das Überdruckventil seinen ersten Einlaß mit seinem Auslaß verbindet, wenn der Druckunterschied zwischen seinem ersten Einlaß und seinem zweiten Einlaß eine vorbestimmte Schwelle überschreitet.

3. Vorrichtung nach Anspruch 2, wobei der Einlaß der Verdrängerpumpe (112) mit dem Hochdruckauslaß der Kreiselpumpe (100) verbunden ist.

4. Vorrichtung nach einem der Ansprüche 2 und 3, wobei die Verdrängerpumpe durch eine regenerative Pumpe ersetzt ist.

5. Vorrichtung nach Anspruch 1, wobei das Hilfspumpaggregat eine zweite Kreiselpumpe (212) und einen elektrischen Steuerkreis (214, 215) umfaßt, um die zweite Kreiselpumpe mit einer Geschwindigkeit anzutreiben, die ermöglicht, den vorbestimmten Mindestdruck bereitzustellen.

6. Vorrichtung nach einem der Ansprüche 1 bis 5, **dadurch gekennzeichnet, daß** sie einen Kreis (115) zur Steuerung des Abschaltens des Hilfspumpaggregats (110), wenn der dem Kreis zur Durchsatzregulierung bereitgestellte Treibstoffdruck oder die Drehzahl des Triebwerks eine vorbestimmte Druck- oder Drehzahlschwelle überschreitet, umfaßt.

7. Vorrichtung nach einem der Ansprüche 1 bis 5, umfassend einen Kreis (115) zur Steuerung des Wiederanlassens des Hilfspumpangregats (110), wenn der dem Kreis zur Durchsatzregulierung bereitgestellte Treibstoffdruck oder die Drehzahl des Triebwerks eine vorbestimmte Druck- oder Drehzahlschwelle unterschreitet.

8. Vorrichtung nach einem der Ansprüche 1 bis 7, wobei die Durchsatzmeßvorrichtung ein Massendurchflußmesser (122) ist und das Steuerungssystem das Ventil in Abhängigkeit eines Sollwerts des Treibstoffmassendurchsatzes steuert.

9. Vorrichtung nach einem der Ansprüche 1 bis 8, wobei das Ventil (124) ein elektrisch gesteuertes Ventil mit direkter Steuerung ist.

10. Vorrichtung nach einem der Ansprüche 1 bis 9, wobei das Steuerungssystem einen lokalen Regelkreis (132) umfaßt, der direkt mit der Durchsatzmeßvorrichtung (122) und mit dem Ventil (124) verbunden ist.

11. Vorrichtung nach einem der Ansprüche 1 bis 7, wobei die Durchsatzmeßvorrichtung ein Volumendurchflußmesser (222) ist.

12. Vorrichtung nach einem der Ansprüche 1 bis 7, wobei die Dursatzmeßvorrichtung eine Vorrichtung (322) ist, die eine Durchsatzmessung anhand der Kenntnis des Druckabfalls und des Querschnitts des Durchlasses durch diese Vorrichtung ermöglicht.

13. Vorrichtung nach einem der Ansprüche 1 bis 12, wobei der Kreis zur Regulierung des Treibstoffdurchsatzes umfaßt:
- eine Vorrichtung (122; 222; 322) zur Messung des Treibstoffdurchsatzes in einer Treibstoffzufuhrleitung,
- ein gesteuertes erstes Ventil (124) mit variabler Öffnung, das an der Zufuhrleitung angebracht ist,
- ein Steuerungssystem, das mit der Durchsatzmeßvorrichtung und mit dem ersten Ventil verbunden ist, um dieses zu steuern, um an das Triebwerk eine gewünschte Treibstoffmenge zu liefern,
- ein gesteuertes zweites Ventil (134) mit variabler Öffnung, das in Reihe mit dem ersten an der Zufuhrleitung angebracht ist, und
- Mittel zur Steuerung des zweiten Ventils, die ermöglichen, an das Triebwerk eine reduzierte Treibstoffmenge zu liefern, die als Reaktion auf eine Erfassung einer zu hohen Geschwindigkeit oder eines zu hohen Schubs des Triebwerks einstellbar ist.

14. Vorrichtung nach Anspruch 13, wobei das erste und das zweite Ventil (124, 134) elektrisch gesteuerte Ventile mit direkter Steuerung sind.
